# EUROPEAN PATENT SPECIFICATION

(11) **EP 0 719 424 B1**
(45) Date of publication and mention of the grant of the patent: **05.01.2000**
(21) Application number: 94924963.5
(22) Date of filing: 02.09.1994
(51) Int. Cl.: G02F 1/1343

(54) **LIGHT MODULATOR**
LICHTMODULATOR
MODULATEUR OPTIQUE

(30) Priority: 18.09.1993 GB 9319351
(43) Date of publication of application: 03.07.1996
(73) Proprietor: CENTRAL RESEARCH LABORATORIES LIMITED, Hayes, Middlesex, UB3 1HH (GB)
(72) Inventor: LOCKMULLER, Neil Central Research Laboratories, Hayes Middlesex UB3 1HH (GB); PETTS, Steven Central Research Laboratories, Hayes Middlesex UB3 1HH (GB)
(74) Representative: Marsh, Robin Geoffrey
(86) International application number: GB9401902
(87) International publication number: WO9508788

(56) References cited:
- EP-A- 0 224 040
- EP-A- 0 468 452
- WO-A-90/15360
- PATENT ABSTRACTS OF JAPAN vol. 14 no. 245 (P-1052) (4188) ,24 May 1990 & JP,A,02 063019 (CANON) 2 March 1990,
- PATENT ABSTRACTS OF JAPAN vol. 9 no. 320 (P-413) ,14 December 1985 & JP,A,60 146220 (MATSUSHITA) 1 August 1985,

## Description

This invention relates to a light modulator comprising a layer of material which is electrically addressable to change an optical property thereof, the layer being sandwiched between first and second substrates bearing first and second sets of spaced electrodes respectively on their inner faces, the sets crossing each other so as to define a matrix of pixels at the areas of overlap between the electrodes thereof, at least one of the sets of electrodes comprising a set of primary electrode portions and a set of corresponding secondary electrode portions separated by a layer of insulating material, at least a part of each secondary electrode portion overlapping at least a part of the corresponding primary electrode portion, the corresponding portions being electrically connected to each other along their lengths through the layer of insulating material.

Some such light modulators are operated by applying or not applying a voltage for a predetermined pulse time between overlapping electrodes for each pixel. The optical property of the material is changed (i.e. to be light-transmissive or not) depending upon on which side of the switching threshold voltage for the material the applied voltage falls.

It is known to provide a multi-threshold device, wherein each pixel includes a plurality of areas which have switching thresholds at different voltage levels, in order to achieve grey scale with only one voltage driver per electrode. This may be achieved by having different spacings between opposing parts of the electrodes. US 4712877 discloses such a device, wherein each electrode of one set has a varying thickness across each pixel, projecting into a layer of liquid crystal material. A disadvantage of this device is that the switching threshold of any particular area of each pixel depends not only on the separation of the electrodes but also upon the thickness of the liquid crystal layer, so that the threshold is difficult to define. In addition, large thickness variations in the electrodes may lead to increased absorption of light and film deposition problems.

A single threshold device having a plurality of sets of sub electrodes is described in EP 0 224 040. This device has a single threshold over the whole pixel area, it therefore does not provide a grey scale.

It is an object of the present invention to alleviate the problems of the known prior art.

According to one aspect of the present invention, there is provided a light modulator as defined in the claims.

This electrode structure may present a substantially flat surface, such that the layer of material. such as liquid crystal matenal, may be of substantially uniform thickness in all areas of each pixel. Thus, the threshold voltage for each area of the pixels may be more easily defined.

Advantageously, each secondary electrode may overlie a part of a gap between the corresponding pnmary electrode and an adjacent primary electrode. In this case, the need for a black mask to block the passage of light between adjacent pixels may be reduced or eliminated.

According to another aspect of the invention, there is provided a method of preparing a substrate for such a light modulator.

In order that the invention may be more readily understood, reference will now be made, by way of example, to the accompanying diagrammatic drawings, in which:
Figure 1 is a cross-sectional view of part of a first light modulator according to the invention;
Figure 2 is a cross-sectional view of part of the lower substrate of the light modulator of Figure 1, taken along line II-II; and
Figure 3 is a cross-sectional view of a substrate for inclusion in a second light modulator according to the invention.

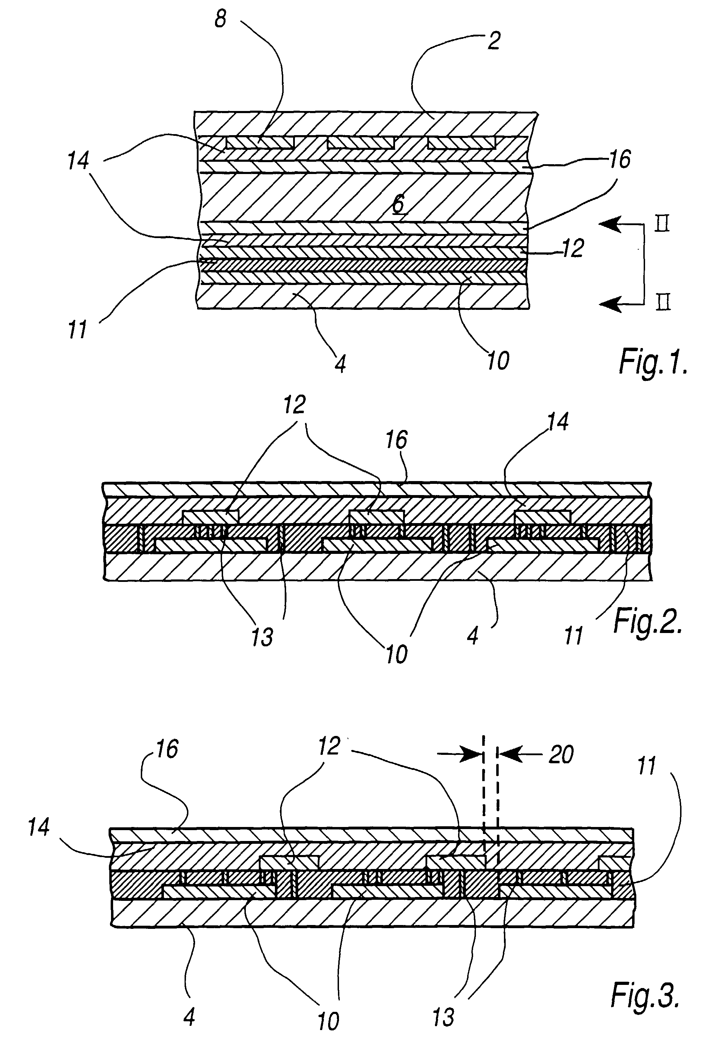

Referring to Figure 1, the light modulator comprises upper and lower substrates 2, 4, for example of glass, and a layer of electrically addressable material 6, for example liquid crystal, between the substrates 2, 4. The upper substrate 2 bears a first set of transparent electrodes 8, which are formed for example of indium tin oxide (ITO), on its inner face. The electrodes 8 are substantially parallel to each other and are spaced apart.

Referring also to Figure 2, the lower substrate 4 bears a second set of electrodes which each comprise a primary electrode portion 10 and a corresponding secondary electrode portion 12. The electrodes portions 10 and 12 are separated by a transparent insulating layer 11 having a plurality of perforations 13 filled with the electrode material so as to form electrical connections between overlying parts of each corresponding primary and secondary electrode portions 10, 12.

The electrodes 10, 12 of the second set are substantially parallel to each other, and extend in a direction crossing the first set of electrodes 8. Both sets of electrodes are covered by a barrier layer 14 and an alignment layer 16, for example of nylon, for aligning the liquid crystal molecules.

The second set of electrodes may be formed in the following manner. The pnmary electrode portions 10, comprising ITO having a low resistance, are formed on the substrate 4. An electrically insulating substance such as a polyimide precursor resin is spin coated over the primary electrode portions 10 to form the insulating layer 11. This is pre-baked at a temperature below the cunng point, but high enough to harden it, and spin coated with a negative photo-resist. The photo-resist is baked and exposed through a speckle hole mask. The speckle hole mask may be constructed by coating a glass sheet with spherical polymer spacers, evaporating chrome over them and then rinsing them off with a suitable solvent.

When the photo-resist is developed, holes corresponding to the speckle holes are etched in the polyimide resin, which may also be achieved by the photoresist developer. The polyimide is then cured, and the ITO of the pnmary electrode portions 10 is briefly etched through the holes to ensure that it is fully exposed. ITO is then deposited over the polyimide to form the connections 13 in the holes and, after patterning, to form the secondary electrode portions 12. The secondary electrode portions 12 may be thinner and thus have a higher resistance per square than the primary electrode portions 10, since they are connected directly to the primary electrode portions 10 at a plurality of positions along their length. The structure is then coated with a barrier layer and alignment layer as is commonly known in the art, and the light modulator may then be assembled in the usual way, with electrical connections from the drive means made only to the primary electrodes 10.

If only the second set of electrodes is formed in the manner described, then each pixel has two areas with different switching thresholds. By forming both the first and second sets of electrodes in this manner, it is possible to have four thresholds. Alternatively or in addition, one or more further sets of secondary electrode portions may be formed on one or both substrates by repeating the above process to provide further areas. In such an embodiment. the further secondary electrode portions may be formed to overlap the existing secondary electrode portions or the pnmary electrode portions or both. Connection of the further secondary electrode portions to the corresponding pnmary electrode portions may be achieved via the existing secondary electrode portions by making holes in each layer. Alternatively, the connection may be made directly by making a single set of holes through all of the polyimide layers.

Referring to Figure 3, the secondary electrode portions 12 may be arranged to overlap the spaces 18 between adjacent primary electrode portions 10, with one edge overlapping the corresponding primary electrode portion 10, and the other edge close to the next primary electrode portion. A small lateral gap 20 between the edge of the secondary electrode portion and the edge of the adjacent primary electrode portion, for example of about 5µm, is desirable to prevent short circuits across the insulating layer 11. In order to position the secondary electrode portions accurately, the polyimide layer may be planarised before depositing the ITO to form the secondary electrode portions. In addition, the speckle hole mask may be arranged to exclude holes from the areas of the gaps 20.

This embodiment of the invention may obviate the need for a black mask structure on one or both of the substrates. Black masks, for example thin layers of chromium, are commonly used to cover the non-active areas of a matrix (that is, the spaces 18 between electrodes), to exclude the passage of light therethrough. Relatively large spaces are necessary because of the chance of imperfections in the formation of the electrodes causing side-to-side short circuits between adjacent electrodes.

According to the invention, it is possible to eliminate non-active areas almost entirely, since only a small gap 20 is needed between adjacent electrodes and the small amount of liquid crystal opposite the gaps 20 may be at least partially activated by edge effects from adjacent electrodes.

If both sets of electrodes are formed as shown in Figure 3, an increase in brightness of around 20% may be achieved over devices requiring a black mask, and fabrication may be simplified.

## Claims

1. A light modulator comprising a layer of material (6) which is electrically addressable to change an optical property thereof, the layer being sandwiched between first and second substrates (2, 4) bearing first and second sets of spaced electrodes (8, 12) respectively on their inner faces, the sets crossing each other so as to define a matrix of pixels at the areas of overlap between the electrodes thereof, at least one of the sets of electrodes comprising a set of primary electrode portions (10) and a set of corresponding secondary electrode portions (12) separated by a layer of insulating material (14), at least a part of each secondary electrode portion overlapping at least a part of the corresponding primary electrode portion, the corresponding portions being electrically connected to each other along their lengths through the layer of insulating material, characterised in that the insulating material is provided with a plurality of holes (13) filled with electrode material so as to form electrical connections between said primary and said secondary electrode portions, the secondary electrode portions having a higher sheet resistance than that of the primary electrode portions, said electrical connections thereby providing a plurality of areas having different respective switching thresholds.

2. A light modulator as claimed in claim 1 in which the electrodes have a substantially flat surface such that the said layer of material (6) is of substantially uniform thickness in a given pixel.

3. A light modulator as claimed in claim 1, wherein the set of secondary electrode portions is a first set, and the light modulator includes a set of corresponding further secondary electrode portions separated from the first set by a further layer of insulating material, at least a part of each further secondary electrode portion overlapping at least a part of the corresponding first secondary electrode portion and/or the corresponding primary electrode portion and being electrically connected thereto along its length through the further layer of insulating material.

4. A light modulator as claimed in claim 1, characterised in that a secondary electrode portion overlaps a part of a space between each corresponding primary electrode and an adjacent primary electrode.

5. A light modulator as claimed in claim 1, wherein the corresponding electrode portions are electrically connected by a plurality of electrical connectors extending in a direction substantially normal to the plane of the layer of insulating material.

6. A method of preparing a substrate for a light modulator as claimed in claim 1 comprising (a) forming the set of primary electrodes on the substrate, (b) depositing a layer of electrically insulating material, (c) forming a plurality of holes in the layer, (d) depositing electrically conductive material to form electrical connections through the holes and to form secondary electrode portions on the layer, the primary and secondary electrode portions having different respective sheet resistances.

7. A method as claimed in claim 6, comprising repeating steps (b) to (d) at least once.

## Patentansprüche

1. Lichtmodulator, enthaltend eine Schicht eines Materials (6), welches zum Ändern einer optischen Eigenschaft derselben elektrisch adressierbar ist, wobei die Schicht "Sandwichartig" zwischen ersten und zweiten Substraten (2, 4) angeordnet ist, die jeweils auf ihren Innenseiten erste und zweite Gruppen beabstandeter Elektroden (8, 12) aufweisen, wobei die Gruppen einander überkreuzen und derart eine Matrix von Bildpunkten (Pixeln) an den Überlappungsbereichen zwischen den Elektroden definieren, wobei wenigstens eine der Gruppe von Elektroden eine Gruppe von Primärelektroden-Abschnitten (10) und, getrennt davon durch eine Schicht isolierenden Materials (14), eine Gruppe korrespondierender Sekundärelektroden-Abschnitte (12) umfaßt, wobei wenigstens ein Teil eines jeden Sekundärelektroden-Abschnitts wenigstens einen Teil des korrespondierenden Primärelektroden-Abschnitts überlappt, wobei die korrespondierenden Abschnitte der Länge nach durch die Schicht isolierenden Materials hindurch miteinander elektrisch verbunden sind, dadurch gekennzeichnet, daß das isolierende Material mit einer Mehrzahl von Löchern (13) versehen ist, welche mit Elektrodenmaterial gefüllt sind, so daß elektrische Verbindungen zwischen den Primär- und den Sekundärelektroden-Abschnitten gebildet werden, wobei die Sekundärelektroden-Abschnitte einen größeren Schichtwiderstand als den der Primärelektroden-Abschnitte aufweisen, wodurch die elektrischen Verbindungen eine Mehrzahl von Bereichen mit entsprechend unterschiedlichen Schalt-Schwellwerten aufweisen.

2. Lichtmodulator wie in Anspruch 1 beansprucht, wobei die Elektroden eine im wesentlichen flache Oberfläche aufweisen, derart, daß die Schicht des Materials (6) bei einem gegebenen Pixel von im wesentlichen gleichmäßiger Dicke ist.

3. Lichtmodulator wie in Anspruch 1 beansprucht, wobei die Gruppe von Sekundärelektroden-Abschnitten eine erste Gruppe ist und der Lichtmodulator eine Gruppe korrespondierender weiterer Sekundärelektroden-Abschnitte beinhaltet, welche von der ersten Gruppe durch eine weitere Schicht isolierenden Materials getrennt ist, wobei wenigstens ein Teil jedes weiteren Sekundärelektroden-Abschnitts wenigstens einen Teil des korrespondierenden ersten Sekundärelektroden-Abschnitts und/oder des korrespondierenden Primärelektroden-Abschnitts überlappt und hiermit der Länge nach durch die weitere Schicht isolierenden Materials hindurch elektrisch verbunden ist.

4. Lichtmodulator wie in Anspruch 1 beansprucht, dadurch gekennzeichnet, daß ein Sekundärelektroden-Abschnitt einen Teil eines Raums zwischen einer jeden korrespondierenden Primärelektrode und einer benachbarten Primärelektrode überlappt.

5. Lichtmodulator wie in Anspruch 1 beansprucht, wobei die korrespondierenden Elektroden-Abschnitte durch eine Mehrzahl von elektrischen Verbindungen, die sich in einer Richtung im wesentlichen senkrecht zur Ebene der Schicht isolierenden Materials erstrecken, elektrisch verbunden sind.

6. Verfahren zum Anfertigen eines Substrats für einen Lichtmodulator wie in Anspruch 1 beansprucht, umfassend die Schritte: (a) Ausformen der Gruppe von Primärelektroden auf dem Substrat, (b) Aufbringen einer Schicht elektrisch isolierenden Materials, (c) Ausformen einer Mehrzahl von Löchern in der Schicht, (d) Aufbringen elektrisch leitenden Materials zur Bildung von elektrischen Verbindungen durch die Löcher und zur Bildung von Sekundärelektroden-Abschnitten auf der Schicht, wobei die Primär- und Sekundärelektroden-Abschnitte entsprechend unterschiedliche Schichtwiderstände aufweisen.

7. Verfahren wie in Anspruch 6 beansprucht, wobei die Schritte (b) bis (d) wenigstens einmal wiederholt werden.

## Revendications

1. Modulateur de lumière comprenant une couche de matière (6) qui est adressable électriquement pour en changer une propriété optique, la couche étant enserrée entre des premiers et deuxième substrats (2, 4) portant des premier et deuxième groupes d'électrodes espacées (8, 12) respectivement sur leurs surfaces intérieures, les groupes se croisant l'un l'autre de manière à déterminer une matrice de pixels dans les zones de superposition entre leurs électrodes, au moins l'un des groupes d'électrodes comprenant un groupe d'éléments d'électrode primaire (10) et un groupe d'éléments correspondants d'électrode secondaire (12) séparés par une couche de matière isolante (14), au moins une partie de chaque élément d'électrode secondaire étant à recouvrement avec au moins une partie de l'élément correspondant d'électrode primaire, les éléments correspondants étant connectés électriquement les unes aux autres en un emplacement de leur longueur à travers la couche de matière isolante, caractérisé en ce que la matière isolante comporte plusieurs trous (13) emplis d'une matière d'électrode de manière à former des connexions électriques entre lesdits éléments primaires et secondaires d'électrode, les éléments d'électrode secondaire ayant une résistance lamellaire supérieure à celle des éléments d'électrode primaire, lesdites connexions électriques constituant ainsi plusieurs zones ayant des seuils respectifs différents de commutation.

2. Modulateur de lumière selon la revendication 1, dans lequel les électrodes ont une surface sensiblement plane de façon que ladite couche de matière (6) soit d'une épaisseur sensiblement uniforme dans un pixel donné.

3. Modulateur de lumière selon la revendication 1, dans lequel le groupe d'éléments d'électrode secondaire est un premier groupe et le modulateur de lumière comprend un groupe d'autres éléments correspondants d'électrode secondaire qui est séparé du premier groupe par une autre couche de matière isolante, au moins une partie de chaque autre élément d'électrode secondaire étant à chevauchement avec au moins une partie de l'élément correspondant de première électrode secondaire et/ou avec l'élément correspondant d'électrode primaire et lui étant connecté électriquement en un emplacement de sa longueur à travers l'autre couche de matière isolante.

4. Modulateur de lumière selon la revendication 1, caractérisé en ce qu'un élément d'électrode secondaire est à chevauchement avec une partie d'un espace situé entre chaque électrode primaire correspondante et une électrode primaire voisine.

5. Modulateur de lumière selon la revendication 1, dans lequel les éléments correspondants d'électrode sont connectés électriquement par plusieurs connecteurs électriques orientés dans une direction sensiblement perpendiculaire au plan de la couche de matière isolante.

6. Procédé de réalisation d'un substrat destiné à un modulateur de lumière selon la revendication 1, comprenant (a) la formation d'un groupe d'électrodes primaires sur le substrat, (b) le dépôt d'une couche de matière électriquement isolante, (c) la formation de plusieurs trous dans la couche, (d) le dépôt de matière électriquement conductrice de manière à former des connexions électriques par les trous et à former des éléments d'électrode secondaire sur la couche, les éléments d'électrode primaire et secondaire ayant des résistances lamellaires respectives différentes.

7. Procédé selon la revendication 6, comprenant la répétition des étapes (b) à (d) au moins une fois.
